# EUROPEAN PATENT SPECIFICATION

(11) **EP 1 694 599 B1**
(45) Date of publication and mention of the grant of the patent: **13.08.2008**
(21) Application number: 03778504.5
(22) Date of filing: 21.11.2003
(51) Int. Cl.: C01B 3/26, D01F 9/127, D01F 9/133

(54) **METHOD FOR CONVERSION OF HYDROCARBONS**
VERFAHREN ZUR UMSETZUNG VON KOHLENWASSERSTOFFEN
PROCEDE DE CONVERSION D'HYDROCARBURES

(43) Date of publication of application: 30.08.2006
(73) Proprietor: StatoilHydro ASA, 4035 Stavanger (NO)
(72) Inventor: EDWIN, Emil Statoil ASA,I&K IR PAT, N-4035 Stavanger (NO); ARNESEN, Tore Statoil ASA, I&K IR PAT, N-4035 Stavanger (NO); AASER, Knut-Ivar Statoil ASA, I&K IR PAT, N-4035 Stavanger (NO); RYTTER, Erling Statoil ASA, I&K IR PAT, N-4035 Stavanger (NO); JOHANSEN, Johan, Arnold Statoil ASA,I&K IR PAT, N-4035 Stavanger (NO)
(74) Representative: Cockbain, Julian
(86) International application number: PCT/GB2003/005086
(87) International publication number: WO 2005/054124

(56) References cited:
- EP-A- 1 188 801
- EP-A- 1 227 062
- US-A- 4 650 657
- US-B1- 6 315 977

## Description

This invention relates to a process for the conversion of hydrocarbons to an environmentally friendly product, particularly carbon, more particularly carbon comprising carbon nanofibres (CNF), otherwise known as filamentous carbon or carbon fibrils.

The CO₂-emissions to the atmosphere caused by the combustion of hydrocarbons such as natural gas have in recent years become quite a hot environmental topic. Thus great resources have been applied to the development of methods and devices for energy conversion of hydrocarbons such as natural gas, whereby the CO₂-emissions to the atmosphere may be avoided or at least reduced significantly.

In hydrocarbon extraction from underground reservoirs, it is frequently the case that liquid hydrocarbons are the desired product and gaseous hydrocarbons, in particular C₁₋₃ hydrocarbons and particularly methane, are extracted in undesirably large quantities. One solution has been to return the gases to the underground reservoir, however this is expensive. Another solution has been simply to burn off unwanted gases: however this generates carbon dioxide, which is undesirable from the environmental point of view.

Energy conversion of hydrocarbons normally includes combustion producing water and CO₂. The CO₂-emission may be reduced by separating the emission into a fraction rich in CO₂, which is deposited e.g. through injection into an oil field, and a fraction poor in CO₂, which is discharged to the atmosphere. The required equipment is cumbersome and expensive, and is normally only suitable for large plants.

It has long been known that the interaction of hydrocarbon gas and metal surfaces can give rise to dehydrogenation and the growth of carbon "whiskers" on the metal surface. More recently it has been found that such carbon whiskers, which are carbon fibres having a diameter of about 3 to 100 nm and a length of about 0.1 to 1000 µm, have interesting and potentially useful properties, eg the ability to act as reservoirs for hydrogen storage (see for example Chambers et al. in J.Phys.Chem. B 102: 4253-4256 (1998) and Fan et al. in Carbon 37: 1649-1652 (1999)).

Such hydrocarbon conversion to hydrogen and carbon however is endothermic and has not been proposed as a means of disposal of hydrocarbons or a means of energy generation.

We have now realized that using such a dehydrogenation reaction hydrocarbon gas may be converted to a commercially valuable and readily transportable product, namely carbon, without any significant production of CO₂ emissions.

Thus viewed from one aspect the invention provides a method for the conversion into carbon of gaseous hydrocarbons extracted from a natural hydrocarbon reservoir, which method comprises contacting said gaseous hydrocarbon at an elevated temperature in a reactor with a catalyst capable of converting said hydrocarbon to carbon and hydrogen; separating hydrogen produced from unconverted hydrocarbon; burning said hydrogen to generate energy; and using the energy generated to heat said reactor or a gaseous hydrocarbon flow thereto, or to heat or power a heat or power consuming apparatus.

Viewed from a further aspect this invention provides an apparatus for the conversion of hydrocarbon gas to carbon, said apparatus comprising a reactor vessel having a gas inlet port and a gas outlet port;
a separator for removing hydrogen from a hydrocarbon and hydrogen containing gas;
a gas conduit from said gas outlet port to said separator;
a combustor arranged to burn hydrogen from said separator to generate energy; and
an energy transferrer arranged to transfer energy from said combustor to said reactor vessel (e.g. by heating the reactor vessel directly or by heating a gas flow to said inlet port) or to a further heat or power consuming apparatus.

The further heat or power consuming apparatus may be any apparatus requiring such input, e.g. an electricity generator or an air or water heating apparatus for example a central heating system.

While hydrogen is separated from unconverted hydrocarbon gas, such that the product of its burning is essentially carbon dioxide free, separation can be only partial resulting in decreased rather than totally eliminated CO₂ emission.

The separated hydrogen typically contains no more than 30 mole % hydrocarbon, especially no more than 10 mole %, particularly no more than 5 mole %, more particularly no more than 1 mole %.

This separated hydrogen, at least in part, is preferably burned to provide heat to the reactor. This may be direct or indirect or both, e.g. with the vapour from the combustion being used in a heat exchange and/or to drive an electrical power generator the output of which may be used to heat the reactor or the gas input therefor. The hydrogen typically will be burned in an internal combustion engine, however conversion to water using a catalytic converter is considered to be encompassed by the term burning.

The gaseous hydrocarbon used in the method of the invention is preferably taken direct from a hydrocarbon well, optionally after transfer down a pipeline, but preferably at the well head. Alternatively however it may be packaged, e.g. in canisters, before use.

The catalyst used in the method of the invention will typically be a metal as described by De Jong et al in Catal. Rev. Sci. Eng. 42: 481-510 (2000) or Rodriguez et al in J. Mater. Res. 8: 3233-3250 (1993), the contents of which are incorporated by reference. Thus the metal catalyst used according to the invention preferably is selected from group 5 to 10 metals, eg nickel, iron, cobalt, vanadium, molybdenum, chromium and ruthenium and alloys thereof, eg Fe/Ni, Cu/Ni etc alloys. Lanthanides may also be used. In general the requirement seems to be that the metal is able to form carbides which are unstable at the temperatures used in the carbon production process. Precious metals, such as Pt, Au and Ag may also be deposited on such metals or alloys. Especially preferably the transition metal of the catalyst is nickel, iron or cobalt or a mixture of two or three thereof, eg Ni/Fe. Particularly preferably the transition metal content of the catalyst metal is at least 50% wt nickel, eg 70% Ni/30% Fe or 100% Ni.

The catalyst may also include a promotor, e.g. a structural promotor such as aluminium.

More preferably the catalyst used is a porous metal catalyst comprising a transition metal or an alloy thereof, e.g. as described in PCT/GB03/002221, a copy of which is filed herewith and the contents of which are hereby incorporated by reference.

By porous is meant metals with a high surface area, typically Raney metals which are produced by leaching one metal out of a metal alloy. The person skilled in the art will readily understand that the term porous is not applicable in this context to grids or meshes formed from solid, i.e. non porous, metals. For particulate porous metal catalysts, surface area (e.g. determined by gas adsorption) will typically be at least 20 m²/g, more preferably at least 40 m²/g, especially at least 50 m²/g e.g. up to 200 m²/g, for example 50-100 m²/g. The mode particle size, before carbon formation begins, will typically be in the range 1 to 300 µm, preferably 5 to 100 µm, especially 10 to 80 µm, more especially 20 to 40 µm. Porous moreover refers to the metal catalyst rather than any catalyst support, i.e. a solid metal catalyst deposited on a porous support, e.g. silica or alumina, is not a porous metal catalyst.

Especially preferably the metal catalyst is produced by total or partial removal of one metallic element from an alloy, eg removal of aluminium from an aluminium-transition metal alloy. Such aluminium-transition metal alloys or intermetals from which aluminium has been removed are available commercially (eg under the trade name Amperkat^{®} from H.C. Starck GmbH & Co AG, Goslar, Germany) or may be prepared from the aluminium alloys by leaching with acid, eg nitric acid. Examples of Amperkat^{®} catalysts available from H.C. Starck include Amperkat SK-NiFe 6816, SK-Ni 3704, SK-Ni 5544, and SK-Ni 5546 which contain respectively 4-7% wt Al: 62-67% wt Ni: 26-30% wt Fe, 4-7% wt A1: 93-96% wt Ni: <1% wt Fe, 5-9% wt Al: 90-95% wt Ni: <0.6% wt Fe, and 5-9% wt A1: 90-95% wt Ni: <0.6% wt Fe. These Amperkat catalysts have a grain size of about 80 µm (i.e. 80-90% below 80µm), a solid concentration of about 20-50% and an apparent density (by watery catalyst slurry) of about 1300 to 1800 kg/m³. The use of SK-Ni 5546 is preferred.

The catalyst is preferably particulate, conveniently having a particle size as described above, or of from 10 nm to 100 µm, preferably 50 nm to 1000 nm, especially 80 to 200 nm.

We also propose to improve the economy of carbon production, by using a porous iron catalyst, i.e. sponge iron (direct reduced iron). Sponge iron has the major advantage that it is inexpensive, thus offering a cheap alternative to the previously used transition metal catalysts. Moreover, it is free from elements that are usually present in ferrous scrap such as copper, zinc, tin, chromium and molybdenum etc. It has low sulphur and phosphorous contents.

By sponge iron is meant the metallic product formed when iron ore is reduced by carbon at a temperature below the melting point of iron (i.e. below 1538°C). It is porous in nature and commonly used in steel-making.

While preferably used in a method for converting hydrocarbons according to the invention, use of sponge iron is novel and therefore provides a further aspect of the invention.

The gas used in the process of the invention may be any hydrocarbon-containing gas, eg C₁₋₃ hydrocarbons (such as for example methane, ethane, propane, ethene, ethyne, etc), napthenes or aromatics from a natural subsurface hydrocarbon reservoir (e.g. oil well). Preferably the gas is or comprises methane. Especially preferably the gas used is a hydrocarbon-containing gas separated from the oil removed from an oil well, optionally after treatment to remove hydrocarbons having four or more carbon atoms per molecule, water, nitrogen and carbon dioxide, and preferably treated to remove catalyst poisons, e.g. sulphur compounds and possibly halogens. Conventional means for poison removal may be used. The methane content of such "natural" gas will generally lie in the range 80 to 95% mole.

In one especially preferred embodiment the gas comprises methane and carbon monoxide as this lowers the energy supply needed since the carbon production reaction is less endothermic with carbon monoxide than with methane alone. In particular it is especially preferred that the feed gas comprise methane and carbon monoxide in a mole ratio of 1:99 to 99:1, more particularly 10:90 to 90:10. Thus it is preferred that the gas comprises methane and carbon monoxide in a mole ratio of from 1:99 to 99:1 preferably with the gas being introduced into the reactor vessel in at least two streams, at least one stream being substantially carbon monoxide free and being at a higher temperature than another carbon monoxide-containing stream, e.g. using a first, carbon monoxide containing, stream at a temperature of 300°C or less and a second, methane-containing, stream at a temperature of 600°C or more, or using a single gas stream at a temperature of 300°C or less, e.g. 200-290°C.

It is also especially preferred that the gas fed into the reactor should, for at least part of the reaction period, contain a small proportion of hydrogen, e.g. 1 to 20% mole, more preferably 2 to 10% mole. This has the effect of reducing the carbon activity of the catalyst metal (i.e. the rate of carbon uptake by the metal) and serves to prolong carbon production, increase total yield and reduce the weight percentage of the carbon product which is in the form of amorphous carbon. Hydrogen can be added to the gas feed to the reactor or off-gas from the reactor may be, in part, recycled into the reactor to provide the desired hydrogen content. Depending on reactor design however, the hydrogen generated by carbon production may be sufficient to provide an appropriate hydrogen content in the carbon/catalyst bed.

The use of hydrogen as a component of the feed gas is, as mentioned above, preferred. However the need for hydrogen input may be reduced or avoided if the reactor is constructed to provide internal recirculation of the gases leaving the catalyst bed.

In the method of the invention, carbon production is preferably effected so as to yield carbon in an amount of at least 1g carbon per gram metal catalyst, more preferably at least 10g/g, still more preferably at least 50g/g, especially at least 100g/g, more especially at least 150g/g, eg 100 to 400 g/g, typically 150 to 250 g/g.

The process of the invention will typically be effected by flowing the hydrocarbon-containing gas past the catalyst.

The hydrogen produced is at least in part separated out of the gas flow from the reactor so that it may be burned to provide a heat source for the reaction. Moreover it is preferred that the gas flow to the catalyst should contain hydrogen, eg 1 to 20% mole, for example 5 to 15% mole, preferably 8 to 11%, and to this end it is preferred that a part of the gas flow from the reactor be drawn off and mixed with the hydrocarbon-containing gas flow to the catalyst. The hydrogen produced may also be separated out from the gas flow inside the reactor. One option is to separate the hydrogen from the catalyst bed by use of membranes (for example ceramic membranes) followed by a subsequent separation and discharge of the carbon product.

The process of the invention is performed at elevated temperature, typically 350 to 1200°C, preferably 400 to 700°C, more preferably 500 to 680°C, especially 525 to 630°C, eg about 600°C. Particularly preferably the temperature is below 900°C, more especially below 850°C, particularly below 800°C, especially below 750°C, e.g. below 700°C, and above 550°C, especially above 600°C, particularly above 630°C. Operating temperatures of between 630 and 680°C have been found to give rise to especially good carbon production rates and yields.

The gas flow to the catalyst is preferably at elevated pressure, eg 2 to 15 bar, especially 3 to 6 bar. The use of pressures above 15 bar is not preferred when methane is the source gas for the carbon, due to undue methane adsorption.

Quite surprisingly, catalyst activity and yield may be maintained if reaction temperature is increased by also increasing gas pressure and vice versa. However use of prolonged reaction time (or residence time in the reactor for a continuous production process) tends to increase the percentage of amorphous carbon in the carbon product. By reaction or residence time is meant the time that the catalyst / carbon spends in the reactor under reaction conditions. The reaction time (or residence time as appropriate) is preferably up to 30 hours, more preferably up to 10 hours, especially up to 3 hours.

The catalyst may be presented as a reaction region with gas flow from bottom to top. However, alternatively, the gas is passed through a catalyst bed in a generally horizontal direction, To this end the reactor may be a substantially horizontal tube, optionally having a cross section which increases in the gas flow direction. Since the catalyst bed will expand as carbon generation proceeds, since carbon coating on catalyst particles causes the particulate to adhere to the reactor walls, and since compression of the catalyst bed reduces carbon growth rate, the lower wall of the reactor may be provided with a downward slope in at least one portion following the initial location of the catalyst bed. Such a horizontal reactor design has the benefit that the carbon product compacts naturally during production without any significant adverse effect on carbon yield. Typically the carbon may compact in this way to a density of about 0.4 to 0.9 g/cm³, more typically 0.5 to 0.7 g/cm³. Without compaction the density is usually 0.4 to 0.5 g/cm³. Alternatively the catalyst/carbon bed may be mechanically agitated, for example to improve gas and heat distribution and/or to facilitate flow of the carbon product towards an outlet.

The method of the invention may be performed continuously or batchwise. In the former case the reactor in which the method is carried out may be provided with means for introducing fresh catalyst at the upstream end of the catalyst bed and for removing carbon from the downstream end of the catalyst bed, eg isolatable settling tanks. In the production of carbon products, particularly for bulk applications, a reactor design similar to the reactor designs used in the polyolefin-industry could be used. These reactors are designed to achieve a favourable mass transport and enhance the reactivity of the reacting gas molecules at the catalytically active metal surfaces.

The reactor used in the method of the invention will conveniently have a volume of 10 to 100m³, preferably 50 to 70 m³ allowing a total product content in the thousands of kilograms. The reactor volume will typically be at least 10L per kg/hour of carbon production. For continuous operation, methane feed rates of 500 to 2000 kg/hour, eg 1000 to 1500 kg/hour, and carbon removal rates of 200 to 2000 kg/hour, eg 750 to 1250 kg/hour may thus typically be achieved. The energy supply necessary to operate such a reactor will typically be in the hundreds of kW, eg 100 to 1000 kW, more typically 500 to 750kW. Alternatively expressed, the energy demand will typically be in the range 1 to 5 kW/kgC.hour⁻¹, e.g. 2-3.5kW/kgC.hour⁻¹. On the small scale, energy supply into the reactor may be achieved by external heating of the reactor or by inclusion within the reactor of heating means or heat exchange elements connected to a heat source. As reactor size increases however it will become more necessary to heat the feed gas that is supplied into the reactor, e.g. to temperatures of 300 to 1200°C, more preferably 300 to 1000°C, especially 500 to 900°C, more especially 800 to 850°C. To minimize catalyst deactivation, heated feed gas is preferably fed into an agitated catalyst/carbon bed at a plurality of points or over the entire undersurface of a gas-fluidized bed. Where the feed gas includes carbon monoxide and methane, the carbon monoxide is preferably introduced at a lower temperature (e.g. <300°C), for example through a separate feed line, e.g. to avoid dusting of ferrous metal feed lines.

Since, as mentioned above, compression of the catalyst bed slows carbon formation, the reactor in which the method of the invention is carried out is preferably provided with means for agitating the catalyst bed. Where the catalyst bed is a horizontal fluidized bed such agitation may be effected by the gas flow through the bed. However, where gas flow is substantially horizontal, the reactor is preferably provided with moving or static mixers downstream of the start of the catalyst bed. Where the method is to be performed batchwise, the carbon generation process may be slowed down or halted towards the end of each batch by compression of the catalyst/carbon bed, either actively or passively by allowing the catalyst/carbon bed to compress itself against the end of the reaction zone in the reactor.

In general, carbon produced by the method of the invention will be subjected to compaction following production and/or to mechanical agitation (e.g. milling) following production. The carbon product is in the form of fibrous particles (e.g. "furballs") - milling can release the fibres if a fibrous product is desired while compaction can be used to increase the density and mechanical strength of the product.

Gas removed from the reactor is preferably passed through a separator in which hydrogen is removed by metallic hydride formation. Pellets of a metallic hydride in a column absorb the produced hydrogen at a low temperature, and the absorbed hydrogen can then be recovered by raising the temperature in the column. Alternatively, the hydrogen can be removed by passage of the gas through a hydrogen-permeable membrane, eg a palladium membrane, which is not permeable to the carbon-containing components of the gas: Pressure Swing Adsorption (PSA) is also an alternative separation principle that may be employed. Another separation method which may be used involves the use of polymer membranes. Such polymer membranes are commercially available for separation of hydrogen and other gas components. The resulting gas with a reduced hydrogen contact may then be recycled into the reactor.

The hydrogen may be absorbed using other metals if desired, e.g. Mg, Mg/Ni, Ca/Ni, La/Ni, Fe/Ti, Ti/Cr, etc.

In a particularly preferred aspect, the catalyst is subjected to an initiation or pretreatment. This serves to increase carbon production rate and carbon yield and may be achieved with any carbon production catalyst, i.e. not just porous metal catalysts, by a limited period of exposure to a feed gas with reduced or no hydrogen content at a lower temperature than the reaction temperature in the main carbon production stage. Such pretreatment is preferably under process conditions under which the carbon activity of the catalyst is greater than in the main carbon production stage. This process thus comprises in a first stage contacting a catalyst for carbon production with a first hydrocarbon-containing gas at a first temperature for a first time period and subsequently contacting said catalyst with a second hydrocarbon-containing gas at a second temperature for a second time period, characterized in that said first gas has a lower hydrogen (H₂) mole percentage than said second gas, said first temperature is lower than said second temperature, and said first period is shorter than said second period. If a higher graphitic contact of the carbon product is desired, the first temperature may be reduced and/or the second temperature may be increased.

In this aspect of the invention, the catalyst is preferably a transition or lanthanide metal or an alloy thereof, especially a transition metal and more especially a porous metal, in particular a nickel containing metal, especially a Raney metal. The temperature, pressure and gas composition, in the second period are preferably as described above for carbon production. The temperature in the first period is preferably in the range 400 to 600°C, especially 450 to 550°C, more especially 460 to 500°C. The hydrogen mole percentage in the first period is preferably 0 to 2% mole, especially 0 to 1% mole, more especially 0 to 0.25% mole, particularly 0 to 0.05% mole. The pressure in the first period is preferably 5 to 10 bar, especially 6 to 9 bar. The duration of the first period is preferably 1 to 60 minutes, more especially 2 to 40 minutes, particularly 5 to 15 minutes.

This pretreatment or initiation of the catalyst causes the catalyst to become a catalyst/carbon agglomerate comprising particles of a carbon-containing metal having carbon on the surfaces thereof.

Before this pretreatment, the catalyst may if desired be treated with hydrogen at elevated temperature, e.g. to reduce any surface oxide.

The carbon produced in the process of the invention may be processed after removal from the reactor, eg to remove catalyst material, to separate carbon fibres from amorphous material, to mix in additives, or by compaction. Catalyst removal typically may involve acid or base treatment; carbon fibre separation may for example involve dispersion in a liquid and sedimentation (eg centrifugation), possibly in combination with other steps such as magnetic separation; additive treatment may for example involve deposition of a further catalytically active material on the carbon, whereby the carbon will then act as a catalyst carrier, or absorption of hydrogen into the carbon; and compaction may be used to produce shaped carbon items, eg pellets, rods, etc.

Processing of the carbon product to reduce the catalyst content therein may also be achieved by heating, e.g. to a temperature above 1000°C, preferably above 2000°C, for example 2200 to 3000°C. The total ash content is also significantly reduced by this treatment.

Catalyst removal from the carbon product may also be effected by exposure to a flow of carbon monoxide, preferably at elevated temperature and pressure, e.g. at least 50°C and at least 20 bar, preferably 50 to 200°C and 30 to 60 bar. The CO stream may be recycled after deposition of any entrained metal carbonyls at an increased temperature, e.g. 230° to 400°C.

As a result of such temperature and/or carbon monoxide treatment an especially low metal content carbon may be produced, e.g. a metal content of less than 0.2% wt, especially less than 0.1% wt, particularly less than 0.05% wt, more particularly less than 0.01% wt, e.g. as low as 0.001% wt.

Publications referred to herein are hereby incorporated by reference.

The method and apparatus of the invention will now be described further with reference to the Example and the accompanying drawing in which:

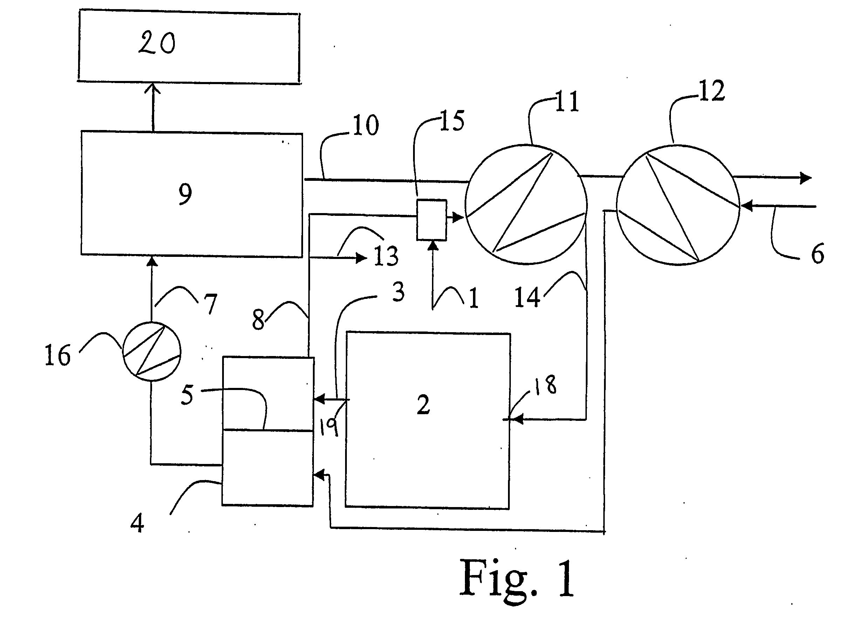

Figure 1 is a schematic drawing of one embodiment of the apparatus of the invention.

Figure 1 schematically shows the construction of an apparatus according to the invention. Hydrocarbon-containing gas, preferably methane-containing gas enters reactor vessel 2 through a gas inlet line 14 and gas inlet port 18. Off-gas from the reactor vessel leaves through gas outlet port 19 and gas outlet line 3. The off gas is fed to separator 4 which, in the form shown comprises two chambers separated by a palladium membrane 5. Hydrogen is separated from the off gas and is fed via supply line 7 to combustor 9 where it is burned, e.g. using air, oxygen or oxygen enriched air or an oxygen / inert gas mixture. The hydrogen supply line 7 may be provided with a heat exchanger 16 to transfer energy to the hydrocarbon gas supply or the air supply.

In the embodiment shown, air supply for the combustor is brought via air supply line 6 into the separator via a heat exchanger 12.

Exhaust gas from the combustor is vented via exhaust line 10 which, in the embodiment shown is provided with heat exchangers 11 and 12 to heat the hydrocarbon and air supply lines.

Electrical energy generated by the combustor is used to heat the reactor vessel and/or the hydrocarbon supply or to power electricity generator 20.

The hydrogen-poor gas from separator 4 is removed via exit line 8 with none, some or all being vented through line 13 or fed through line 13 to a burner, not shown. The remaining portion is mixed with the source hydrocarbon gas (e.g. methane or natural gas) in mixer 15 before being fed, via heat exchanger 11 to supply line 14. The source gas is preferably supplied via inlet line 1 at a pressure of about 200 bar. Mixer 15 may take the form of an ejector pump 15 that is driven by the source hydrocarbon gas being depressurised from a pressure of about 200 bar to 1-5 bar.

The reactor 2 may be a fluidized bed reactor constructed with a minimal pressure drop. It is also possible for the reactor to be constructed in a manner so as to allow continuous replacement of deactivated catalyst and removal of carbon while adding new catalyst. The reactor should be compact, as heat loss is proportional to the surface area.

The combustor 9 may for example be any type of internal combustion engine run on an air/hydrogen mixture, e.g. a piston engine, a Wankel engine or a turbine.

The exhaust gas from the combustor will typically have a temperature of 500 - 1400°C, e.g. around 900°C.

When using a palladium membrane, the air is preheated through heat exchange with exhaust gas from the combustor, e.g. in heat exchanger 12, before being sent into the separator 4, to a temperature typically of at least 400°C in order to avoid a steep temperature gradient across the membrane. The mixture of air and hydrogen should then be cooled with cold air or possibly incoming natural gas in line 1, in a heat exchanger or intercooler 16, before the mixture is led into the combustor 9.

Even though an internal combustion engine is a relatively inefficient energy converter, the total energy production from the present apparatus is large, because heat from the exhaust gas is used to heat the gas supply, and consequently to drive the endothermic reaction in the reactor vessel 2.

The above illustrated solution for transferring heat from the hot exhaust gas from the internal combustion engine to the reactor can be implemented in other ways than that described above. As an example, some of the heat from the exhaust gas may be used for direct heating of the catalyst bed in the reactor vessel 2, e.g. by the exhaust gas or some of it being passed through channels through the catalyst bed, and some of the heat may be used for heating the incoming gas prior to this entering the reactor vessel 2. Direct heating of the catalyst bed in the reactor vessel 2 is desirable in order to achieve a high conversion by means of a high temperature throughout the catalyst bed, including at the outlet end.

### Example

The following simulation exemplifies a device or energy converter according to the present invention as described above and shown in Figure 1:

**Table 1. Mass balance for the reactor**

| | |
|---|---|
| Methane consumption | 0.32 kmol/h |
| H₂ production through membrane 5 | 0.6 kmol/h |
| Recycling, line 8 | 0.7 kmol/h |
| Purge stream, line 13 | 0.02 kmol/h |
| Air in, line 6 (0.3 kmol/h O₂+1.2 kmol/h N₂) | 1.5 kmol/h |
| Exhaust, line 10 (0.6 kmol/h H₂O+1.2 kmol/h N₂) | 1.8 kmol/h |

**Table 2. Energy balance for the energy converter**

| | Energy production |
|---|---|
| Engine | 25.8 kW |
| Exhaust, 910-500°C, heat exchanger 11 | 7.3 kW |
| Endothermic energy for reactor 2 at 30% methane conversion | -7.3 kW |
| Exhaust, 500-120°C, heat exchanger 12 | 6.1 kW |
| Air, 20-500°C, heat exchanger 12 | -6.1 kW |
| Air+H₂, 500-20°C, intercooler 16 | 8.4 kW |
| CH₄, 20-500°C, heat exchanger 11 | -1.9 kW |
| Air-air cooling in intercooler 16 | -6.5 kW |
| Carbon fibres | 7.2 kW |
| Total energy production | 33.0 kW |

The carbon fibres produced in this model amount to 3.6 kg of carbon per hour. In the model, these carbon fibres are considered a product, hence entering into the model with an energy yield of 7.2 kW.

Moreover, the model is based on an ideal situation, among other things without heat loss. It is also possible to combust the purge gas from line 13 in the combustor 9, or it may be combusted for direct heating of the reactor vessel or the gas supply thereto, which would at least partly compensate for the heat loss experienced in practice.

The above described apparatus may be constructed as a compact and relatively small unit that may be used for CO₂-free energy conversion in sparsely populated areas, e.g. in the form of small, possibly mobile generator plants for electric power. Such units may be used in ships, mobile and fixed offshore installations, land vehicles and also other isolated locations. Instead of releasing CO₂, carbon may be removed in a relatively easy to handle form, as carbon whiskers.

In order for the device to have an acceptable noise level and energy efficiency, the heat exchangers 11, 12 should preferably be combined with mufflers in order to minimize the pressure drop on the exhaust side of the combustor.

Carbon whiskers may have many different applications. As mentioned above, they may be used for transport of hydrogen, as relatively large amounts of hydrogen may be adsorbed on these carbon whiskers. As an example, it has been reported that more than 23 litres may be stored per gram of carbon. After the hydrogen has been removed again, the carbon may be regenerated and re-used for storage of hydrogen.

In addition, carbon whiskers in the form of microfibres have a potential use in composite materials, plastics, etc. for reinforcement of these. Moreover, they may be used as catalyst supports, as well as for adsorption of various gases.

In addition to the above described unit, various alterations and modifications may be envisaged.

## Claims

1. A method for the conversion into carbon of gaseous hydrocarbons extracted from a natural hydrocarbon reservoir, which method comprises contacting said gaseous hydrocarbon at an elevated temperature in a reactor with a catalyst capable of converting said hydrocarbon to carbon and hydrogen; separating hydrogen produced from unconverted hydrocarbon; burning said hydrogen to generate energy; and using the energy generated to heat said reactor or the gaseous hydrocarbon flow thereto, or to heat or power a heat or power consuming apparatus.

2. A method as claimed in claim 1 wherein the energy generated is used to heat said reactor or the gaseous hydrocarbon flow thereto.

3. A method as claimed in claim 1 wherein the energy generated is used to power an electricity generator.

4. A method as claimed in any one of claims 1 to 3, wherein said catalyst is particulate.

5. A method as claimed in any one of claims 1 to 4 wherein said catalyst is a Raney metal.

6. A method as claimed in any one of claims 1 to 4 wherein said catalyst comprises an element selected from Ni, Co and Fe.

7. A method as claimed in any one of claims 1 to 6 wherein said catalyst is particulate with a mode particle size of 1 to 300µm.

8. A method as claimed in any one of claims 1 to 6 wherein hydrogen is burned in an internal combustion engine.

9. A method as claimed in any one of claims 1 to 8 wherein the hydrogen is separated from the unconverted hydrocarbon using a hydrogen-permeable membrane.

10. An apparatus for the conversion of hydrocarbon gas to carbon, said apparatus comprising a reactor vessel (2) having a gas inlet port (18) and a gas outlet port (19);
a separator (4) for removing hydrogen from a hydrocarbon and hydrogen containing gas;
a gas conduit (3) from said gas outlet port to said separator;
a combustor (9) arranged to burn hydrogen from said separator to generate energy; and
an energy transferrer (11) arranged to transfer energy from said combustor to said reactor vessel or to a further heat or power consuming apparatus (20).

11. An apparatus as claimed in claim 9 further comprising an electricity generator (20) powered by energy from said combustor.

## Patentansprüche

1. Verfahren zur Umwandlung gasförmiger Kohlenwasserstoffe, die einem natürlichen Kohlenwasserstoffreservoir entnommen sind, in Kohlenstoff, bei dem man den gasförmigen Wasserstoff bei erhöhter Temperatur in einem Reaktor mit einem Katalysator in Kontakt bringt, der den Kohlenwasserstoff in Kohlenstoff und Wasserstoff umwanden kann; den erzeugten Wasserstoff vom nicht umgesetzten Kohlenwasserstoff abtrennt; den Wasserstoff zur Energieerzeugung verbrennt; und die erzeugte Energie zum Erwärmen des Reaktors oder des in diesen strömenden gasförmigen Kohlenwasserstoffs oder zum Erwärmen oder Betreiben einer wärme- oder kraftverbrauchenden Vorrichtung verwendet.

2. Verfahren nach Anspruch 1, wobei man die erzeugte Energie zum Erwärmen des Reaktors oder des in diesen strömenden gasförmigen Kohlenwasserstoffs verwendet.

3. Verfahren nach Anspruch 1, wobei man die erzeugte Energie zum Betreiben eines Elektrizitätsgenerators verwendet.

4. Verfahren nach einem der Ansprüche 1 bis 3, wobei der Katalysator teilchenförmig ist.

5. Verfahren nach einem der Ansprüche 1 bis 4, wobei es sich bei dem Katalysator um ein Raney-Metall handelt.

6. Verfahren nach einem der Ansprüche 1 bis 4, wobei der Katalysator ein unter Ni, Co und Fe ausgewähltes Element umfasst.

7. Verfahren nach einem der Ansprüche 1 bis 4, wobei der Katalysator teilchenförmig mit einer modalen Teilchengröße von 1 bis 300 µm ist.

8. Verfahren nach einem der Ansprüche 1 bis 6, wobei man den Wasserstoff in einem Verbrennungsmotor verbrennt.

9. Verfahren nach einem der Ansprüche 1 bis 8, wobei man den Wasserstoff mit einer Wasserstoff-permeablen Membran vom nicht umgesetzten Kohlenwasserstoff abtrennt.

10. Vorrichtung zur Umwandlung von Kohlenwasserstoffgas in Kohlenstoff, umfassend einen Reaktorbehälter (2) mit einem Gaseinlassanschluss (18) und einem Gasauslassanschluss (19);
einem Separator (4) zum Entfernen von Wasserstoff aus einem Kohlenwasserstoff und Wasserstoff enthaltenden Gas;
einer Gasleitung (3) vom Gasauslassanschluss zum Separator;
einer Verbrennungsanlage (9), die so eingerichtet ist, dass sie Wasserstoff aus dem Separator unter Energieerzeugung verbrennt; und
einem Energieübertrager (11), der so eingerichtet ist, dass er Energie von der Verbrennungsanlage auf den Reaktorbehälter oder eine weitere wärme- oder kraftverbrauchende Vorrichtung (20) überträgt.

11. Vorrichtung nach Anspruch 9, außerdem umfassend einen Elektrizitätsgenerator (20), der durch Energie von der Verbrennungsanlage betrieben wird.

## Revendications

1. Procédé de conversion en carbone d'hydrocarbures gazeux, extraits d'un réservoir d'hydrocarbures naturel, lequel procédé comprend les étapes consistant à mettre en contact, dans un réacteur à haute température, ledit hydrocarbure gazeux avec un catalyseur capable de convertir ledit hydrocarbure en carbone et en hydrogène ; séparer l'hydrogène produit d'avec l'hydrocarbure non converti ; brûler ledit hydrogène en vue de produire de l'énergie ; et utiliser l'énergie produite pour chauffer ledit réacteur ou le courant d'hydrocarbure gazeux vers celui-ci, ou pour chauffer ou alimenter en énergie un appareil consommateur de chaleur ou d'énergie.

2. Procédé selon la revendication 1 dans lequel l'énergie produite est utilisée pour chauffer ledit réacteur ou le courant d'hydrocarbure gazeux vers celui-ci.

3. Procédé selon la revendication 1 dans lequel l'énergie produite est utilisée pour alimenter un générateur électrique.

4. Procédé selon l'une quelconque des revendications 1 à 3 dans lequel ledit catalyseur est un catalyseur particulaire.

5. Procédé selon l'une quelconque des revendications 1 à 4 dans lequel ledit catalyseur est un métal de Raney.

6. Procédé selon l'une quelconque des revendications 1 à 4 dans lequel ledit catalyseur comprend un élément choisi parmi Ni, Co et Fe.

7. Procédé selon l'une quelconque des revendications 1 à 6 dans lequel ledit catalyseur est un catalyseur particulaire ayant une taille de particule modale allant de 1 à 300 µm.

8. Procédé selon l'une quelconque des revendications 1 à 6 dans lequel l'hydrogène est brûlé dans un moteur à combustion interne.

9. Procédé selon l'une quelconque des revendications 1 à 8 dans lequel l'hydrogène est séparé de l'hydrocarbure non converti au moyen d'une membrane perméable à l'hydrogène.

10. Appareil de conversion d'un gaz hydrocarboné en carbone, ledit appareil comprenant un réacteur (2) pourvu d'un orifice d'entrée de gaz (18) et d'un orifice de sortie de gaz (19) ;
- un séparateur (4) destiné à retirer l'hydrogène d'un gaz contenant un hydrocarbure et de l'hydrogène ;
- un conduit de gaz (3) s'étendant dudit orifice de sortie de gaz audit séparateur ;
- une chambre de combustion (9) conçue pour brûler l'hydrogène provenant dudit séparateur en vue de produire de l'énergie ; et
- un dispositif de transfert d'énergie (11) conçu pour transférer l'énergie provenant de ladite chambre de combustion vers ledit réacteur ou vers un autre appareil consommateur de chaleur ou d'énergie (20).

11. Appareil selon la revendication 9 comprenant en outre un générateur électrique (20) alimenté par l'énergie provenant de ladite chambre de combustion.
